# EUROPEAN PATENT APPLICATION

(11) **EP 1 988 437 A1**
(43) Date of publication of application: **05.11.2008**
(21) Application number: 07107575.8
(22) Date of filing: 04.05.2007
(51) Int. Cl.: G05B 19/408, G05B 19/418, G06F 17/30

(54) **Device description file conversion**

(71) Applicant: ABB RESEARCH LTD., 8050 Zürich (CH)
(72) Inventor: Kalland, Lars, N-1344, Haslum (NO); Braun, Roland, 53859, Niederkassel (DE); Johansson, Henrik, S-72215, Västerås (SE); Johansson, Morgan, S-72338, Västerås (SE)
(74) Representative: Dahnér, Christer

(57) **Abstract**

The invention concerns a method, device and computer program product for translating a first device description file (CID) to a second device description file (GSDML). Both files have elements (E0,E1,E2,E3,E4,E5,E6,O0,O1,O2,O3,O4,O5) linked to each other including a device related element (E6,O5), function elements (E2,E1,O3,O2) and data provision elements (E0,O1,O0). The device related element (E6) and function elements (E2,E1) of the first file are converted to a device related element (O5) and function elements (O3,O2) of the second file, data providing connectivity aspects according to the second standard are extracted from the first file and applied on at least one element of the second file and non-extracted parts of the data provision element (E0) of the first file are converted to at least one data provision element (O0,O1) of the second file.

## Description

### TECHNICAL FIELD OF THE INVENTION

The present invention relates to enabling communication between devices provided in different communication environments. The invention more particularly relates to a method, device and computer program product for translating a first device description file including settings and capabilities of a first device according to a first standard to a second device description file enabling communication with the first device according to a second standard.

### DESCRIPTION OF RELATED ART

Object based computerised systems are known to be used for controlling manufacturing and process industries, such as chemical plants, oil refineries, pulp and paper mills, steel mills, etc. They are also used in electrical power generation systems.

One general type of communication standard used is the PROFINET IO standard, which is widespread in many various types of control systems.

In the field of substation automation another standard has become more and more in demand and that is the standard IEC 61850. This standard is provided for substation equipment and enables communication between equipment from such substation equipment from different suppliers, and is therefore of interest to use by many electrical power supply companies. The standard also enables exchange of device descriptions and engineering data among different suppliers in a standardized way. However this standard is in essence limited to this area and cannot readily be used in other environments or in other control levels. This means that it may be hard to incorporate in a power control system that uses another standard.

The control equipment manufacturers would normally desire to provide equipment that can be used in as many different technical environments as possible and also for controlling a power generation system. This means that they would want to use the above mentioned PROFINET IO standard in order to cover a larger market while at the same time deliver equipment that can communicate according to the IEC 61850 standard.

In order to be able to do this a mapping of one model to the other may be provided. This is done in order for a first device implementing the hierarchical data model of the IEC 61850 standard to exchange data with other devices using the hierarchical data model of the PROFINET IO standard. However, this is often not enough. In order for another device to be able to communicate with such a device implementing the first standard, it has to gain access to information regarding the functions and capabilities of the first device. It has to get access to a device type description.

In the first standard, there are associated one or more such descriptions, which may be provided as XML files. One group of such files according to the IEC 61850 standard are termed SCL (Substation Configuration Language), which specifically includes a file CID (Configured IED description) describing a first configured device and an ICD (IED Capability Description) describing the device features, i.e. its capabilities. In the second standard there is also such a file describing the functions and capabilities of the device. In case the second standard is PROFINET lO, this file is called GSDML (Generic Station Description Markup Language). This means that in order to be able to communicate with a first device using the second standard, the other devices also need the information provided by such a file according to the second standard.

There is therefore a need to be able to create such a device description file of the second standard based on information from at least one corresponding device description file of the first standard.

There do exist previous efforts to map one such file to another, where one general approach is described in US 2002/0059566 and one specific for mapping an SCL file according to the IEC standard 61850 to a corresponding file according to the IEC standard 61970 and vice versa is described in WO 2006/017944. The conversion is here also done based on an UML model.

However the information needed in the device description file of the second standard in many cases differs from the information provided in the file of the first standard. There is therefore a need to provide a conversion mechanism that is able to obtain the additional information needed for the second file that is not normally provided by such a first file.

### SUMMARY OF THE INVENTION

The present invention is therefore directed towards converting a first device description file into a second device description file.

One object of the present invention is therefore to provide a method for translating a first device description file including settings and capabilities of a first device according to a first standard to a second device description file enabling communication with the first device according to a second standard.

This object is according to a first aspect of the present invention achieved through a method for translating a first device description file including settings and capabilities of a first device according to a first standard to a second device description file enabling communication with the first device according to a second standard,
where both the files have a series of elements linked to each other including at least one device related element, at least one function element and at least one data provision element comprising the steps of:
converting the device related element of the first file to a device related element of the second file,
converting function elements of the first file to function elements of the second file, extracting data providing connectivity aspects according to the second standard from the first file,
applying said extracted data on at least one element of the second file, and
converting non-extracted parts of said data provision element of the first file to at least one data provision element of the second file.

Another object of the present invention is to provide a device for translating a first device description file including settings and capabilities of a first device according to a first standard to a second device description file enabling communication with the first device according to a second standard.

This object is according to a second aspect of the present invention achieved through a device for translating a first device description file including settings and capabilities of a first device according to a first standard to a second device description file enabling communication with the first device according to a second standard,
where both the files have a series of elements linked to each other including at least one device related element, at least one function element and at least one data provision element and comprising
a file conversion unit arranged to
convert the device related element of the first file to a device related element of the second file,
convert function elements of the first file to function elements of the second file, extract data providing connectivity aspects according to the second standard from the first file,
apply said extracted data on at least one element of the second file, and
convert non-extracted parts of the data provision element of the first file to at least one data provision element of the second file.

Another object of the present invention is to provide a computer program product for translating a first device description file including settings and capabilities of a first device according to a first standard to a second device description file enabling communication with the first device according to a second standard.

This object is according to a third aspect of the present invention achieved through a computer program product for translating a first device description file including settings and capabilities of a first device according to a first standard to a second device , description file enabling communication with the first device according to a second standard,
where both the files have a series of elements linked to each other including at least one device related element, at least one function element and at least one data provision element and
said computer program product comprising computer program code to make the a device translating the first file perform when said code is loaded into said device:
convert the device related element of the first file to a device related element of the second file,
convert function elements of the first file to function elements of the second file,
extract data providing connectivity aspects according to the second standard from the first file,
apply said extracted data on at least one element of the second file, and
convert non-extracted parts of the data provision element of the first file to at least one data provision element of the second file.

The present invention has the advantage of enabling data exchange in an environment according to a second standard for a device implementing a first standard. A device, which in this way is able to perform data exchange according to a second standard, can therefore be used in several different environments, which improves the flexibility of the device. Devices using the second standard are in this way furthermore allowed to communicate with devices implementing the first standard without having to be modified. The first device description file that includes connectivity aspects according to the second standard can furthermore still be used as a device description file in the first environment. Thus it is still possible to communicate with the first device according to the first standard, if this is desirable.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a simplified computer based system for process control comprising a number of different control levels and two different communication environments,
fig. 2 shows a block schematic of a data mapping between a first and a second hierarchical data model,
fig. 3 shows a file provision unit communicating with a device for translating a first file of the first standard to a second file of the second standard, which in turn communicates with another device
fig. 4 shows in simplified the structural layout of the relationship between elements of the first and second files and the mapping of these elements,
fig. 5 schematically shows the general structure of a device description file of the first standard that has been modified according to the invention,
fig. 6 schematically shows a device description file according to the second standard obtained through the file of fig. 5, and
fig. 7 schematically shows a computer program product in the form of a CD ROM disc comprising computer program code for carrying out a method of the present invention.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

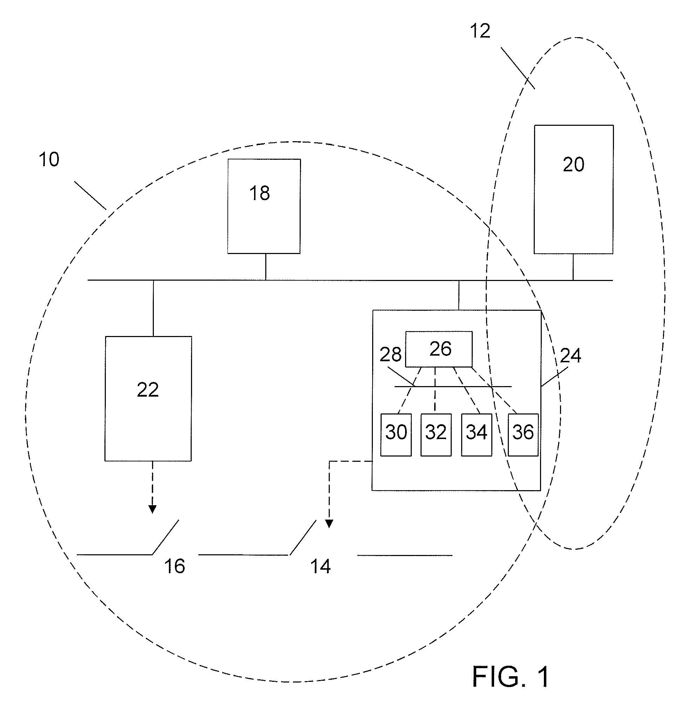

Fig. 1 schematically shows a system for process control. The system is typically an object based computerised system for controlling a process or perhaps part of a process. The main field of use of the present invention is in the field of an electrical power generation and supply process. The system may however be applicable also on other processes, such as water purification and distribution processes, oil and gas production and distribution processes, petrochemical, chemical, pharmaceutical and food processes, and pulp and paper production processes. These are just some examples of processes where the system can be applied. There exist countless other processes. The system in fig. 1 is divided into three levels a field device level, a local control level and a central control level. In the field device level there are here provided two field devices 14 and 16, which are here exemplified as two controlled relays that are used in controlling power supply. These relays are here controlled by two local process control devices 22 and 24 in the local control level. These local process control devices 22 and 24 are often called substation equipment. The local process control devices 22 and 24 are furthermore connected to two central control devices 18 and 20, which are typically provided as servers providing control applications using the local process control devices. These applications are typically provided through object-based application programs.

A first central control device 18, the local process control devices 22 and 24 and the field devices 14 and 16 are in this embodiment provided in a first environment 10, which according to the present invention may be an environment where communication is carried out according to the standard IEC 61850, while a second central control device 20 is provided in a second environment 12, which is an environment where communication is carried out according to a second standard, which standard may be PNIO. As can be seen a part of the local process control device 24 is also provided in the second environment 12. The local process control devices 22 and 24 are in the first communication environment 10 also denoted IED (Intelligent Electronic Device). It should here be realised that the field devices may not be provided in the first environment, but provided in another environment.

In fig. 1 a first of these local control devices 24 is shown in more detail. It is provided with an application handling unit 26, which handles various local control applications in relation to field devices 14 and 16 that are to be controlled. This can include sending control commands to such field devices as well as gathering data from these devices. The various applications of the local process control device 24 thus need to communicate with these field devices 14 and 16. It does of course also need to communicate with the first central control device 18 and with other local process control devices 22 in order to for instance agree on which local process control device is to control which field device. Here one function may be to use so-called "interlocking", where one device can reserve the right to operate field devices and depending on the setup it may be necessary restrict (interlock) other local process control devices from operating other or the same field device. In order to do this the local process control device 24 is provided with a number of communication handling units 30, 32, 34, 36, where some of these are first model communication handling units. In fig. 1 there is shown a first, second and third communication handling unit 30, 32 and 34 for communicating according to the first model. The first communication handling unit 30 communicating according to the first model is provided for communication with the field devices 14 and 16. In IEC 61850 this communication handling unit 30 is also termed a SAV (Sampled Analog Values) communication handling unit. The second communication handling unit 32 communicating according to the first model is provided for communication with other local process control devices. In IEC 61850 this communication handling unit for communicating with other IEDs is termed a GOOSE (Generic Object Oriented Substation Event) communication handling unit. The communication handling unit 34 communicating according to the first model is finally provided for communicating with devices on a higher level in the first environment 10, such the first central control device 18. Such a communication handling unit is in IEC 61850 often termed a MMS (Manufacturing Messaging Specification) communication handling unit. The application handling unit communicates with all the communication handling units 30, 32, 34 and 36 via an interface 28, often termed an ACSI (Abstract Communication Service Interface) in IEC 61850. All that has been described so far is well known within the art and not really a part of the present invention.

In fig. 1 there is also provided a second model communication handling unit 36, with which the application handling unit 26 communicates via the interface 28 in order to be able to send data to the second central control device 20 provided in the second environment 12. For this reason the second model communication handling unit 36 is shown as being included in the second environment 12.

The reason for providing two different environments is that in some fields of technology one specific standard has to be supported by control devices for some special reason. In the field of substation automation the IEC 61850 standard has to be supported by substation equipment because it is a major standard that allows combination of equipment from different suppliers. This standard thus enables the communication between equipment from different suppliers, and is therefore of interest to use by many electrical power supply companies. This standard is however in essence limited to this area and can not readily be used in other environments and perhaps not on other levels in a control system.

The suppliers of such control equipment do often want to have control equipment that can be used for controlling many different types of processes.

Therefore, the control equipment manufacturers would normally desire to provide equipment that can be used in as many different technical environments as possible. When this is needed another standard is often more desirable. This standard is in many cases the standard PROFINET IO. This means that they would want to continue to use the above mentioned PROFINET IO standard in order to cover a larger market and to provide overall control of a power generation and supply process while at the same time deliver equipment that can communicate according to the IEC 61850 standard.

In order to be able to do this, there is therefore a need for providing a process control device that implements a hierarchical data model of the IEC 61850 standard and a PROFINET IO communication interface in order to be able to communicate with other devices using a hierarchical data model of the PROFINET IO standard. This is not so simple to achieve because of the different ways that this communication is provided and the different ways that data is organized in.

This can be done through the use of the second model communication handling unit 36, which performs a mapping of the data structure according to a first data model that is here IEC 61850 to a second data model that is here PROFINET IO (PNIO).

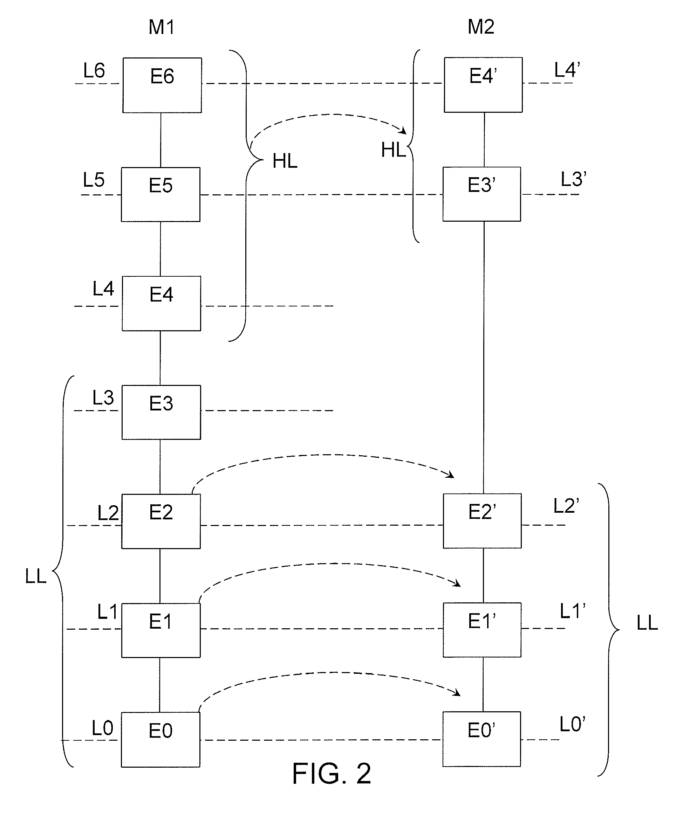

How the mapping is done will now be described in more detail with reference being made also to fig. 2, which schematically shows the two hierarchical data models M1 and M2 according to the different standards.

The IEC 61850 structure includes seven different elements. Where a first bottom element E0, which is a data provision element provided on a first lowest level L0 is denoted data attribute DA, a second higher element E1 provided on a second higher level L1 is termed data object DO, a third element E2 on a third higher level L2 is termed a logical node LN, a fourth element E3 on a fourth higher level L3 is termed a logical device LD, a fifth element E4 on a fifth higher level L4 is termed a server, a sixth element E5 on a sixth higher level L5 is termed Access Point and a seventh element E6 on a highest level L6 is termed an IED. The first, second, third and fourth elements E0, E1, E2 and E3 are here provided in a set of low level elements LL, while the fifth, sixth and seventh elements E4, E5 and E6 are a set of high level HL elements. The high level elements are device related elements because they are related to the device itself and its location. As an example they may include information like general information associated with the device, such as device number, communication address, vendor information, serial number etc.. The seventh element E6 here corresponds to an identifier of a physical device, while the sixth element E5 is directed towards providing information about how logical functions in the device communicates with other entities in the first environment. It therefore corresponds to an indication of the type of connections that are provided for a logical device. In the set of low level elements LL, the fourth element E3, logical device, here corresponds to a collection of various functions in the device, the third element E2, logical node, corresponds to one specific function of this logical device, the second element E1 is a data object that corresponds to data associated with the function and the first element E0 corresponds to attributes of such data. A logical node is in IEC 61850 the smallest part of a function that exchanges data. It is an element defined by its data and method. It can be seen as an atomic sub-functional unit that can exchange data. The first and second elements E0 and E1 furthermore allow nested elements. This means that an element on one level may include one or more other elements on the same level. A data object may for instance include other data objects in addition to its data attributes.

The second model, which is the PNIO model, has a different structure. This structure only includes five elements. Here one type of first bottom element E0', which is also a data provision element, provided on a first lowest level L0 is termed channel, record data or diagnostic data, the second element E2' above this first element E1' provided on a second higher level L1' is termed subslot, the third element E2' provided on a third higher level L2' is termed slot, the fourth E3' provided on a fourth higher level L3' is termed API (access point identifier) while the fifth E4' element that is provided on a fifth highest level L4' is termed device instance. The fourth and fifth elements E3' and E4' here make up a set of high level elements HL while the first, second and third elements E0', E1' and E2' make up a set of low level LL elements. Also here the set of high level elements are device related elements that are associated with the location of a device. They may also here include other information like general information associated with the device, such as device number, communication address, vendor information, serial number etc. In this model the fifth element E4' identifies a logical device within a PROFINET lO device, the fourth element E3' identifies an interface of the logical device, while the second and third elements, E1' and E2' represent structural units of this interface where a process can be accessed. The first element E0' then represents data of the function provided via these structural units of the interface. There is thus no direct correspondence between the different levels. There are furthermore more levels in the first model M1 than in the second model M2 and the first model M1 may allow nested structures.

The second model communication handling unit 36 maps the logical representation of the first device 24 in the first model M1 to the second data model M2 in order to enable communication between the devices 24 and 20 in the two environments 10 and 12. As seen from the device 20 in the second environment 12, the device 24 here appears as a device in the second environment 12, as is indicated by the second model communication unit 36 being provided in this second environment. The second model communication handling unit 36 enables this communication through mapping the first level element E0 of the first model M1 on the first level element E0' of the second model M2, the second level element E1 of the first model M1 on the second level element E1' of the second model M2, the third level element E2 of the first model M1 on the third level element E2' of the second model M2. The low level elements of the first model that are being mapped are thus here mapped in ascending order to an element on a corresponding level in the second model starting from the lowest levels. The high level elements of the first model are also mapped on the high level elements of the second model. Here one or more of the high level elements of the first model is mapped to one or more of the high level elements of the second model. As an example, the sixth level element E5 of the first model M1 may be mapped on the fourth level element E3' of the second model M2 and the seventh level element E6 of the first model M1 may be mapped on the fifth level element E4' of the second model M2, while the fifth level element E4 may remain unmapped. In this way a logical node with a number of data objects and their attributes associated with a logical device provided in the first model M1 is mapped onto a number of logical connection points of the logical interface in the second model M2, while the access point of the first model M1 is mapped onto the logical interface (API) of the second model M2. As can be seen in fig. 2, all low level elements in the second model receive a mapping from elements in the first model. As can also be seen not all elements in the first model are being mapped.

In order to be able to preserve knowledge of the structure of the first data model, at least some of these unmapped elements should be accounted for in the mapping. This is generally done through including an identifier of an unmapped element in the mapping being performed for the closest lower element that is actually mapped. This is for instance done for the element E3 on the fourth level L4. In the embodiment described here the identifier is a name of the element. In order to be able to identity the correct logical device, the logical device name is combined with the name of a logical node in order to form a slot name.

A slot name will then have the following structure:
slot_name: logical_device_name. logical_node_name

It should here be realised that it is in the same way possible to include the name of the server in the mapping if this is desired. In this case the slot name would have the following structure:
slot_name: server_name. logical_device_name. logical_node_name

The name is just an identifier of the element of a level. It should here be realised that other types of identifiers may be provided than names. The important thing is that the non-mapped element is identified.

In the first data model M1 data objects on the second level L1 may be nested. This means that one data object may include other data objects. Such nested data objects are not mapped. However they are accounted for in the same way as described above through including an identifier of the nested data object in the closest lower element being mapped, which is here a data attribute element.

For an exemplifying data object D01 having data attributes DA1 and DA2 as well as a nested data object DO11 with data attributes DA3 and DA4, the data object D01 is mapped according to:
subslot_name: data_object1_name,

The data attributes directly associated with data object D01 are mapped according to:
channel_name1: data_attribute_name1
channel_name2: data_attribute_name2
while the nested data objected DO11 is mapped using its attributes through:
channel_name3: data_object11_name.data_attribute_name3
channel_name4: data_object11_name.data_attribute_name4

It is here also possible that a data attribute is nested in another data attribute. Here the nested data attribute is mapped on a channel, while name of the data attribute that includes the nested data attribute is considered in the mapping in the same way as was described above.

Data attributes furthermore have a functional constraint indicating for instance a status value or control parameters. The second model communication handling unit keeps a table of these functional constraints and selects a PNIO service based on the constraint. Typical services may be cyclic data, acyclic data alarm and diagnostics. The data provision element in the PNIO model may furthermore be various types of elements, such as a channel, record data or diagnosis data. It is here also possible that the type of element to which the data attribute is being mapped is also determined based on the functional constraint.

A first logical node in the first model M1, often named node LLN0, also has a special meaning in that it specifies characteristics of the device itself. It includes a configuration of a data set which groups data objects and/or data attributes from the normal logical nodes (comprising normal control functionality for various entities in the system). There is also another dedicated logical node LPHD in the first model M1, which is used to represent the physical device itself. Each node is mapped to a dedicated slot and one or more associated subslots. Normally this mapping is done through a mapping of LLN0 to a dedicated slot subslot combination, which combination corresponds to a PNIO Device Access Point (DAP). As an alternative it may be mapped to more subslots of the dedicated slot. The LPHD node may also be mapped to a slot subslot combination. Also this LPHD node may be mapped to more subslots of the dedicated slot. Which slots to actually use is usually determined by the vendor of the specific equipment.

When data is being sent to and received from the central control device 20 of the second environment 12 it is sent and received according to the second model M2. When the second model communication handling unit 36 receives a packet including such data, it thus identifies the channel field as a data attribute, the subslot field as a data object, the API field as an access point and furthermore extracts the logical device name from the slot name for provision in the logical device element. In this way data or commands for a certain function in a group of functions can easily be provided for the application handling unit 26 of the local process control device 24.

In the opposite direction the application handling unit 26 of the local process control device 24 believes that it is communicating with another local process device in the first environment 10. However, the second model communication control unit 36 here in essence restructures the data to fit the format of the second environment 12 via mapping between the two data models M1 and M2.

In this way it is possible to provide communication between the devices having different communication protocols and thus enhanced and more flexible communication ability is provided to local process control devices. This is furthermore done in an efficient manner. Devices provided in the second environment are in this way furthermore allowed to communicate with devices in the first environment without having to be modified.

In order to be able to communicate using this mapping, the device 20 in the second environment 12 has to be informed of the capabilities of the device 24 in the first environment 10. Moreover this information has to be provided in the context of the second standard. This means that the capabilities and how to access these capabilities have to be provided in relation to the second environment. The capabilities are according to both standards announced using at least one device description file. However, the device description file of the first standard cannot be used as the device description file of the second standard. A conversion has to be made. The object of the present invention is to convert a first device description file according to the first standard to a device description file according to the second standard, such that devices in the second environment can communicate with the first local processing device according to the second model.

In the field of IEC 61850 such device descriptions are provided in the form of SCL files, where one such file is a CID (Configured IED Description) file. Other files are here the ICD (IED Capability Description) file and the SCD (Substation Configuration Description) file. These files are often provided as XML files. In PROFINET IO there are also such files, GSDML (Generic Station Description Markup Language) files and also provided as XML files. The present invention is therefore directed towards converting such a device description file of the first standard to a device description file of the second standard. However, this task is not simple, because the information needed for providing such a GSDML file is not all provided in a normal CID file.

The present invention is directed towards a conversion of such a first device description file that is here a CID file to a second device description file that is here a GSDML file in order to enable communication with the first device according to the second standard.

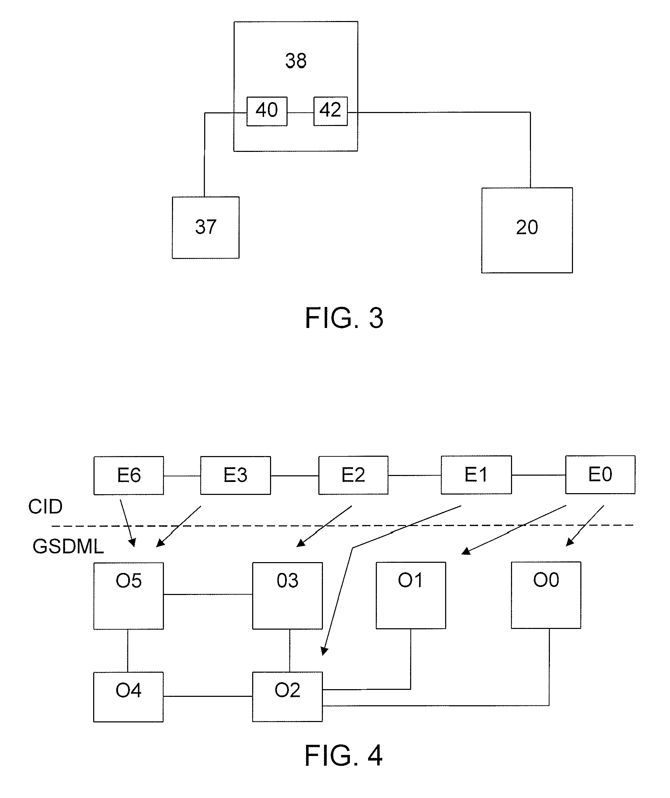

The functioning of the present invention will now be described with reference being made to fig. 3 - 6, where fig. 3 shows a block schematic of a file provision unit 37, which is a configuration tool for the local process control device 24. The file provision unit 37 is connected to a file conversion unit 40 of a file translating device 38. The file conversion unit 40 is in turn connected to a communication unit 42 of the translating device 38, which is connected to the other device 20 of the second environment.

Fig. 4 schematically shows the element structure of such files, a CID file and a GSDML file. Both files have a series of elements E0, E1, E2, E3, E4, E5, E6, 00, 01, 02, 03, 04, 05 linked to each other including at least one device related element E6, 05, at least one function element E2, E1, 03, 02 and at least one data provision element E0, 00, 01. The CID file essentially has the same type of elements as the elements of the first communication model shown in fig. 2 and includes settings and capabilities of the first device 24 according to the first standard in the first environment. However, for simplicity the fifth and sixth levels E4 and E5 have been omitted, since the information provided in these elements is not necessary for the conversion to the GSDML file. Another reason is that in the following only one logical device will be allowed per IED device. The invention is however not limited to this and in case more logical devices are allowed this element may be included. Thus here the data provision element E0 i.e. data attribute, is linked to the data object E1, which in turn is linked to the logical node E2, which in turn is linked to the logical device E3. The logical device E3 is here linked to the device related element IED E6.

If the elements of the first file CID all correspond to the elements of the first model M1 in fig. 2, there is a difference between the elements of the second communication model M2 and the elements of the second file GSDML. The elements of the second model M2 did not include any information of the functionality, but only of structural units of an interface. In the GSDML file the opposite situation exists. There are no elements of the structural units, but of the functionality instead, which is expressed as modules and submodules. Information about structural units is however included as a part of such a function element.

In the GSDML file, there is a parameter element 00 and an lO data element 01. Both these elements are related to data types and properties of these data types and are thus data provision elements. Both these elements 00 and 01 are furthermore linked to a submodule element 02, which submodule element 02 is linked to a module element 03 as well as to an element device access point, which in GSDML is often denoted DeviceAccessPointltem. Here the module element 03 and submodule element 02 are function elements. The device access point element 04 and the module element 03 are finally linked to device element 05. The device element 05 and the device access point element 04 here correspond to the device element E5' and interface element E4' of fig. 2. The module and submodule elements 03 and 02 here represent functions and subfunctions of such functions that can be plugged into structural units of the interface, i.e to slots and subslots, while the elements 01 and 00 represent types of data and parameters of such functions and subfunctions. Generally speaking a slot is therefore an attribute of a module, while a subslot is an attribute of a submodule.

According to the present invention the data attribute element E0 of the CID file is converted to the parameter element 00 and the IO data element 01 of GDMSL file, while data object element E1 is converted to the submodule element 02. The logical node element E2 is in turn converted to the module element 03, while the logical device element E3 and the IED element E6 are both converted to the device element 05. In this conversion the UML model is used. As can be seen from the fig. 4 and the description above, it is not possible to only make the conversion. The device access point element 04 is not getting converted from an element in the CID file nor is any slot and subslot information directly provided in a straight conversion. Also the device element 05 needs some additional data that is not provided in the IED element E6. Further measures are therefore necessary in order to provide a GDMSL file from a CID file.

A CID file does furthermore include elements and sections that can be defined by the user. According to the present invention such fields and areas of the CID file are used to insert information in the CID file regarding connectivity aspects of the second standard. This information can be extracted and used in the GDMSL file that is created.

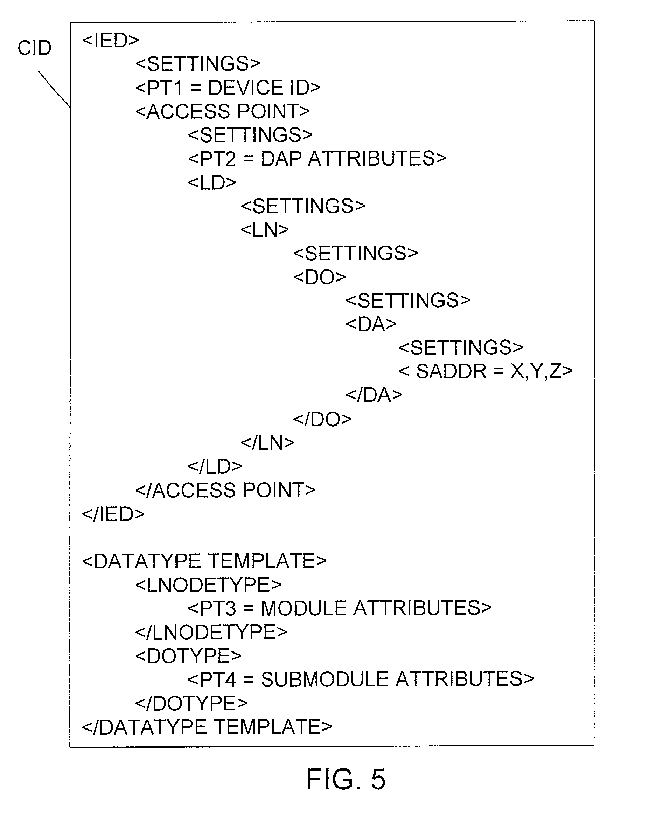

In relation to this reference is now also being made to fig. 5, which shows a simplified CID file according to the present invention. The file is here an XML file and generally includes sections according to the first model M1, of which only some elements that are relevant to the present invention are shown. In the file there is a top element IED, having some standard settings as well as a first private type PT1. There is furthermore an element Access Point, with some settings and a second private type PT2.

In this element Access Point there is a logical device element LD, which includes a number of settings and a logical node element LN. The logical node element LN does in turn include a number of settings and a data object DO, which in turn includes a number of settings and a data attribute DA. All the elements include various normal settings. The data attribute DA does furthermore include an address field SADDR, which will be used according to the present invention.

After all these elements that are provided in the element IED there follows a library of various data types DATATYPE TEMPLATE. This library includes definitions of logical node types LNODETYPE and definitions of data object types DOTYPE. It should be realised that more definitions of various types of data may be included in this library. What is important though is that also this library includes private types and these private types that are associated with the elements mentioned above are used according to the present invention.

A private type is a data section that is free for a user to set him/herself. This means that these sections are free to use and will according to the present invention be used for providing at least some of the additional data that is needed for the conversion from a CID to a GSDML file. Also the address fields are free to use when defining the functionality of an attribute. This is according to the present invention also used for providing the required additional information.

When an engineer therefore is to create a CID file for the first device he may access a CID file creation tool, which asks him to enter data that is required for GSDML file. This tool may with advantage be provided in the file provision unit 37. It would then first ask for device related information, such as device type identity and vendor identity. This information is normally provided by the device vendor. The engineer may enter this information him/herself. This is then entered as device id in the first private type PT1 by the tool. Thereafter the engineer may be asked to enter various communication parameters. These communication parameters may also be obtained from another SCL file. He/she also has to identify various data associated with the device access point, such as the slots it covers, various modules and submodules that are provided via this access point etc. These data DAP attributes are then stored as the second private type PT2 in the access point element of the CID file. Thereafter the engineer gets to enter module attributes data indicating a module identity which is stored as a third private type PT3 in the library DATATYPETEMPLATE as well as submodule attributes data indicating submodule parameters which are stored as the fourth private type PT4 in the same library. Finally the engineer gets to enter address settings X, Y, Z for the data attribute DA. These settings are then used for indicating the slots and subslots of the interface, modules and submodules of the GSDML file. There may be several such address settings for one data attribute. There may furthermore exist more than one data attribute for a data object that includes such settings. However, in order to simplify the description of the present invention only one has been described here. Once this has been done and the ordinary settings of the CID file have been completed, the file CID is then forwarded from the file provision unit 37 to the device 38.

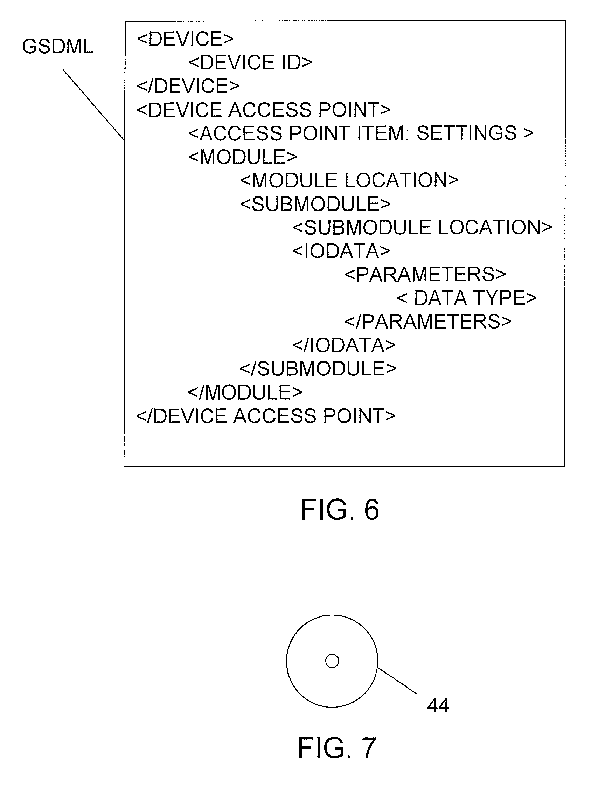

In device 38, the file conversion unit 40 translates the CID file into a GSDML file and here fetches the additional data from the private types and address fields of the data attribute and enters the data into the correct elements of the GSDML file. In the translation the conversion unit 40 converts the device related element E6 of the CID file to a device related element 05 of the GSDML file, converts function elements E2, E1 of the CID file to function elements 03, 02 of the second file, automatically extracts data providing connectivity aspects according to the second standard from the first file and applies the extracted data on the elements of the second file. Here the first private type PT1 is applied on the element 05, the second private type PT2 applied on the element 04, the third private type on the element 03 and the fourth private type on the element 02. The extracted address fields of the element E0 here include slot and subslot information that is applied on the elements 04, 03 and 02 of the second file. The un-extracted parts of the element E0 are then converted to elements 00 and 01, when translating data attributes to parameters and IO settings. The converting unit 40 furthermore looks at a table of functional constraints indicating for instance a status value or control parameters. It here selects type of 10 data or parameters based on these constraints. The file conversion unit 40 thus controls the converting of the element E0 in dependence of the functional constraints. The conversion may here include the setting of a type of service for an element in the GSDML file. A simplified exemplifying GSDML file provided in this way is shown in fig. 6, where the added data from the private types are clearly indicated.

When translating has been finished, the GSDML file is forwarded to the communication unit 42, which in turn sends it to the second device 20 or some other device where the capabilities are advertised. The second device 20 can now investigate the GDMSL file and thereafter easily communicate with the local processing device 24 after this.

The present invention has the advantage of enabling data exchange in an environment according to a second standard for a device implementing a first standard. A device, which in this way is able to perform data exchange according to a second standard, can therefore be used in several different environments, which improves the flexibility of the device. Devices using the second standard are in this way furthermore allowed to communicate with devices implementing the first standard without having to be modified. The CID file that has been modified in the above described way can furthermore still be used as a device description file in the first environment. Thus it is still possible to exchange data in the environment of the first standard according to the modified CID file, if this is desirable.

The translating device according to the present invention may be implemented through one or more processors together with computer program code for performing its functions. The program code mentioned above may also be provided as a computer program product, for instance in the form of one or more data carriers carrying computer program code for performing the functionality of the present invention when being loaded into the translating device. One such carrier 44, in the form of a CD ROM disc is generally outlined in fig. 7. It is however feasible with other data carriers, like diskettes, memory sticks or USB memories. The computer program code can furthermore be provided as pure program code on an external server and fetched from there for provision in the device that is to receive it. The file providing unit may be provided in the same way.

While the invention has been described in connection with what is presently considered to be most practical and preferred embodiments, it is to be understood that the invention is not to be limited to the disclosed embodiments, but on the contrary, is intended to cover various modifications and equivalent arrangements. It is possible to use other SCL files than the CID file, for instance the ICD and SCD files. The file may be obtained from any suitable entity in the first environment, like for instance from a library of configuration files or from an external tool as well as the device in question itself. The invention is for instance not limited to the described files and standards, but may be applied for translating of any device description file to another. Therefore the number of elements translated may differ from what has been described above. The translating device may be a part of the first local processing device or be a separate entity. The process control device according to the present invention may not be provided in the first environment, but only in the second environment. Therefore the present invention is only to be limited by the following claims.

## Claims

1. Method for translating a first device description file (CID) including settings and capabilities of a first device (24) according to a first standard to a second device description file (GSDML) enabling communication with the first device according to a second standard,
where both the files have a series of elements (E0, E1, E2, E3, E4, E5, E6, 00, 01, 02, 03, 04, 05) linked to each other including at least one device related element (E6, 05), at least one function element (E2, E1, 03, 02) and at least one data provision element (E0, 01, 00) comprising the steps of:
converting the device related element (E6) of the first file to a device related element (05) of the second file,
converting function elements (E2, E1) of the first file to function elements (03, 02) of the second file,
extracting data (PT1, PT2, PT3, PT4, X,Y, Z) providing connectivity aspects according to the second standard from the first file,
applying said extracted data on at least one element of the second file, and
converting non-extracted parts of said data provision element (E0) of the first file to at least one data provision element (O0, O1) of the second file.

2. Method according to claim 1, wherein the data providing connectivity aspects includes data (X, Y, Z) indicating structural units according to the second standard being provided in user defined fields (SADDR) provided in a data provision element (E0) of the first file.

3. Method according to claim 2, wherein the data indicating structural units is provided in an address field (SADDR) related to the data provision element (E0) of the first file.

4. Method according to any previous claim, wherein the step of extracting comprises extracting at least one user defined section (PT1, PT2, PT3, PT4) provided for at least one element of the first file and applying it to at least one of the elements of the second file.

5. Method according to claim 4, wherein at least one of the user defined sections is provided in relation to an element type library provided in the first file and the step of applying comprises applying the user defined section of an element type to an element in the second file.

6. Method according to claim 5, wherein one element in the second file is an element to which the corresponding element of the first file is being converted.

7. Method according to claim 5 or 6, wherein one of the elements of the second file is an element (04) providing a logical interface and at least one of the user defined sections is applied to this element.

8. Method according to claim 7, wherein none of the elements of the first file are converted to the logical interface.

9. Method according to any of claims 4 - 8, wherein at least one of the user defined sections is provided in relation to an element of the first file and the step of applying comprises applying the user defined section of this element to the element in the second file to which the corresponding element of the first file is being converted.

10. Method according to any previous claim, wherein the step of converting the remaining data provision element of the first file to at least one data provision element of the second file comprises reading a functional constraint of the data provision element of the first type and controlling the converting of this element in dependence of the functional constraint.

11. Method according to claim 10, wherein the step of controlling comprises setting a type of service for the corresponding element in the second file.

12. Method according to any previous claim, wherein the elements of the first file (CID) includes an an element (E3) directed towards identifying a collection of functions, an element (E2) identifying functions, an element (E1) providing data for these functions and an element (E0 providing attributes of said data, while the elements of the second file includes an element (04') providing a logical interface, an element (03) providing a module, an element (02) providing a submodule, an element (01) providing input/output data and an element (00) providing parameters.

13. Method according to claim 12, wherein the first model is the IEC 61850 model and the second model is a PROFINET IO model.

14. Method according to any previous claim, further comprising the step of transmitting the second file to another device in order to announce the capabilities of the first device.

15. Device (38) for translating a first device description file (CID) including settings and capabilities of a first device (24) according to a first standard to a second device description file (GSDML) enabling communication with the first device according to a second standard,
where both the files have a series of elements (E0, E1, E2, E3, E4, E5, E6, 00, 01, 02, 03, 04, 05) linked to each other including at least one device related element (E6, 05), at least one function element (E2, E1, 03, 02) and at least one data provision element (E0, 01, 00) and comprising
a file conversion unit (40) arranged to
convert the device related element (E6) of the first file to a device related element (05) of the second file,
convert function elements (E2, E1) of the first file to function elements (03, 02) of the second file,
extract data providing connectivity aspects according to the second standard from the first file,
apply said extracted data on at least one element of the second file, and
convert non-extracted parts of the data provision element (E0) of the first file to at least one data provision element (O0, O1) of the second file.

16. Device (38) according to claim 15, wherein the data providing connectivity aspects includes data (X, Y, Z) indicating structural units according to the second standard being provided in user defined fields (SADDR) provided in a data provision element (E0) of the first file.

17. Device (38) according to claim 16, wherein data indicating structural units is provided in an address field (SADDR) related to the data provision element (E0) of the first file.

18. Device (38) according to any of claims 15 - 17, wherein said file conversion unit when being arranged to extract data is arranged to extract at least one user defined section (PT1, PT2, PT3, PT4) provided for at least one element of the first file and apply it to at least one of the elements of the second file.

19. Device (38) according to claim 18, wherein at least one of the user defined sections is provided in relation to an element type library provided in the first file and said file conversion unit when being arranged to apply a user defined section is arranged to apply the user defined section of an element type to an element in the second file.

20. Device (38) according to claim 19, wherein one element in the second file is an element to which the corresponding element of the first file is being converted.

21. Device (38) according to claim 18 or 19, wherein one of the elements of the second file is an element (04) providing a logical interface and at least one of the user defined sections is applied to this element.

22. Device (38) according to claim 21, wherein none of the elements of the first file are converted to the logical interface.

23. Device (38) according to any of claims 18 - 22, wherein at least one of the user defined sections is provided in relation to an element of the first file and said file conversion unit being arranged to apply a user defined section step is arranged to apply the user defined section of this element to the element in the second file to which the corresponding element of the first file is being converted.

24. Device (38) according to any of claims 15 - 23, wherein said file conversion unit when being arranged to convert the remaining data provision element of the first file to at least one data provision element of the second file is further arranged to read a functional constraint of the data provision element of the first type and control the converting of this element in dependence of the functional constraints.

25. Device (38) according to claim 24, wherein the controlling comprises setting a type of service for the corresponding element in the second file.

26. Device (38) according to any of claims 15 - 25, wherein the elements of the first file (M1) includes an element (E5) directed towards providing information about how logical functions in a device communicate with other entities in the first environment (10) an element directed towards identifying a collection of functions, an element identifying functions, an element providing data for these functions and an element providing attributes of said data, while the elements of the second file includes an element (E3') providing a logical interface, an element providing a module, an element providing a submodule, an element providing input/output data and an element providing parameters.

27. Device (38) according to claim 26, wherein the first model is the IEC 61850 model and the second model is a PROFINET IO model.

28. Device (38) according to any of claims 15 - 27, further comprising a communication unit (42) arranged to transmit the second file to another device in order to announce the capabilities of the first device.

29. Computer program product (44) for translating a first device description file (CID) including settings and capabilities of a first device (24) according to a first standard to a second device description file (GSDML) enabling communication with the first device according to a second standard,
where both the files have a series of elements (E0, E1, E2, E3, E4, E5, E6, 00, 01, 02, 03, 04, 05) linked to each other including at least one device related element (E6, 05), at least one function element (E2, E1, 03, 02) and at least one data provision element (E0, 01, 00) and
said computer program product (44) comprising computer program code to make the a device (38) translating the first file perform when said code is loaded into said device (38):
convert the device related element (E6) of the first file to a device related element (05) of the second file,
convert function elements (E2, E1) of the first file to function elements (03, 02) of the second file,
extract data (PT1, PT2, PT3, PT4, X,Y, Z) providing connectivity aspects according to the second standard from the first file,
apply said extracted data on at least one element of the second file, and
convert non-extracted parts of the data provision element (E0) of the first file to at least one data provision element (O0, O1) of the second file.
